# EUROPÄISCHE PATENTSCHRIFT

(11) **EP 1 030 193 B1**
(45) Veröffentlichungstag und Bekanntmachung des Hinweises auf die Patenterteilung: **16.04.2003**
(21) Anmeldenummer: 00102916.4
(22) Anmeldetag: 12.02.2000
(51) Int. Cl.: G01W 1/00, G01L 19/10, G01L 19/16, G01D 7/00

(54) **Barometer mit elektronisch gesteuerter Anzeige**
Barometer with electronically controlled display
Baromètre avec affichage à commande électronique

(30) Priorität: 18.02.1999 DE 29902984 U
(43) Veröffentlichungstag der Anmeldung: 23.08.2000
(73) Patentinhaber: Heyler, Adolf, 78056 Villingen-Schwenningen Weighelm (DE)
(72) Erfinder: Heyler, Adolf, 78056 Villingen-Schwenningen Weigheim (DE)
(74) Vertreter: Neymeyer, Franz, Dipl.-Ing. (FH)

(56) Entgegenhaltungen:
- DE-A- 19 723 186
- US-A- 4 327 583
- US-A- 5 802 016

## Beschreibung

Die Erfindung betrifft ein Barometer mit einer elektronisch gesteuerten Tendenzanzeigevorrichtung und einer Barometerdose, die luftdruckabhängig über eine Überhubkupplung den Umschaltkontakt eines wenigstens zwei Festkontakte aufweisenden Umkehrschalters betätigt, dessen Schaltzustände in bestimmten Zeitabständen von einer elektronischen Steuereinheit für die Anzeige abgefragt werden.

Aus DE 30 13 658 C2 ist ein Barometer mit einer Vorrichtung zur unmittelbaren Anzeige der positiven und negativen Luftdruckänderungen bekannt, die wenigstens fünf aus unterschiedlich farbigen elektrischen Lampen bestehende Anzeigeelemente aufweist. Zu-deren separater Ansteuerung sind als Signalgeber zwei elektrische Umkehrschalter mit jeweils zwei Festkontakten und einem dazwischenliegenden Umschaltkontakt vorgesehen, der über eine Überhubkupplung von einer Barometermeßdose derart betätigt wird, daß bei jeder Bewegungsumkehr eine sofortige Mitnahme des Umschaltkontaktes erfolgt. Dabei haben die Festkontakte der beiden Umkehrschalter unterschiedliche Abstände, die unterschiedlichen Luftdruckdifferenzen entsprechen. Während einige Lampen direkt von den Umkehrschaltkontakten angesteuert werden, sind andere nur über Flip-Flop-Schaltungen und logische Verknüpfungsglieder ansteuerbar, um jeweils eine auswertbare Anzeige zu erhalten.

Insgesamt ist diese bekannte Anzeigevorrichtung sehr umständlich und schwer im Sinne einer Wetterprognose zu deuten.

Aus der DE-OS 34 46 443 ist bereits ein Barometer mit einer Vorrichtung zur Anzeige der positiven und negativen Luftdruckänderungen bekannt, bei der die Anzeige ebenfalls durch wenigstens einen elektrischen, aus zwei Festkontakten und einem zwischen diesem hin und her beweglichen Umschaltkontakt bestehenden Umkehrschalter der vorerwähnten Art gesteuert wird.

Benutzt wird dieser Umkehrschalter für eine elektronisch gesteuerte, digitale Anzeigevorrichtung, welche die variablen Augenblickswerte des jeweils herrschenden Luftdrucks digital, z.B. in Millibar, anzeigt.

Außerdem ist dieses Barometer mit einer digitalen Tendenzanzeigevorrichtung ausgestattet, welche einen zusätzlichen elektronischen Meßspeicher umfaßt, der einen Augenblicksmeßwert über eine längere Zeit gespeichert hält, bis ein neuer Augenblicksmeßwert eingeschrieben und zugleich der ältere, gespeicherte Meßwert, gelöscht wird.

Dabei erfolgt die Ansteuerung des zusätzlichen Meßwertspeichers zur Einspeicherung eines neuen Augenblickswertes und zur Löschung eines älteren Meßwertes mit Hilfe des Umschalters in der Weise, daß immer nur der im Augenblick einer Tendenzumkehr gemessene Druckänderungsumkehrwert als Augenblickswert in den Meßspeicher der Tendenzanzeige eingeschrieben und zur Anzeige gebracht oder zur Differenzbildung benutzt wird.

Abgesehen davon, daß das Grundprinzip dieser Steuerung einen erheblichen Steuerungsaufwand bedingt, ist die digitale Anzeige insgesamt unübersichtlich und nur schlecht erfaßbar.

Aus der US-PS 4 054 058 ist aber auch schon ein Barometer mit einer motorisch angetriebenen analogen Nachlauf-Tendenzanzeige bekannt. Allerdings ist als Anzeigeorgan ein Zeiger in einer motorisch angetriebenen Kontaktscheibe vorgesehen, in welcher ein Unterbrecherorgan angeordnet ist, welches Kontaktschalter, die um die Scheibe herum angeordnet sind, öffnet und dadurch den Antriebsmotor der Scheibe abschaltet. Auch diese Tendenzanzeige ist unübersichtlich und im übrigen bezüglich ihrer Steuerung sehr aufwendig.

Der Erfindung liegt die Aufgabe zugrunde, ein Barometer der eingangs genannten Art zu schaffen, das eine von einer einfachen elektronischen Steuereinrichtung gesteuerte, leicht erkenn- und ablesbare analoge Tendenzanzeige aufweist.

Gelöst wird diese Aufgabe erfindungsgemäß dadurch, daß die Tendenzanzeigevorrichtung einen Tendenzzeiger aufweist, der von einem ersten Schrittmotor in einer vorbestimmten Richtung um jeweils eine vorbestimmte Anzahl von Schaltschritten dem jeweiligen Schaltzustand des Umschalters entsprechend drehend verstellt wird, sowie einen Nachlaufzeiger, der in koaxialer Anordnung zum Tendenzzeiger von einem zweiten Schrittmotor in der gleichen Drehrichtung nach jeder Verstellbewegung des Tendenzzeigers um die Anzahl von Schaltschritten bewegt, die dem Winkelabstand entspricht, um den die beiden Zeiger während der jeweils vorherigen Anzeige gegeneinander versetzt waren, wobei zur Steuerung der beiden Schrittmotoren ein Mikrocontroller vorgesehen ist, der die jeweiligen Zeigerstellungen registriert und die zur korrekten Anzeige erforderlichen Schaltschritte für die Schrittmotoren der Zeiger berechnet.

Die besonderen Vorteile des erfindungsgemäßen Barometers bestehen einerseits in der sehr einfachen Steuereinrichtung und andererseits in der übersichtlichen und gut erkennbaren Anzeige, aus welcher der Betrachter leicht eine Wetterprognose ablesen kann.

Vorteilhafte Ausgestaltungen der Erfindung sind Gegenstand der abhängigen Ansprüche 2 bis 7.

Anhand der Zeichnung wird im folgenden die Erfindung näher erläutert. Es zeigt:
- Fig.1: in schematisch vereinfachter Perspektivdarstellung die Tendenzanzeigevorrichtung mit zwei motorisch angetriebenen Zeigern;
- Fig. 2: ein vereinfachtes Blockschaltbild der elektronischen Steuereinrichtung;
- Fig. 3: den elektrischen Umkehrschalter in unterschiedlichen Schaltpositionen;
- Fig. 4: die Tendenzanzeigevorrichtung in Frontansicht;
- Fig. 5: eine andere Tendenzanzeigevorrichtung in Frontansicht;
- Fig. 6: ein weiteres Ausführungsbeispiel einer erfindungsgemäßen Tendenzanzeigevorrichtung;
- Fig. 7: ein Detail der Tendenzanzeigevorrichtung nach Figur 6.

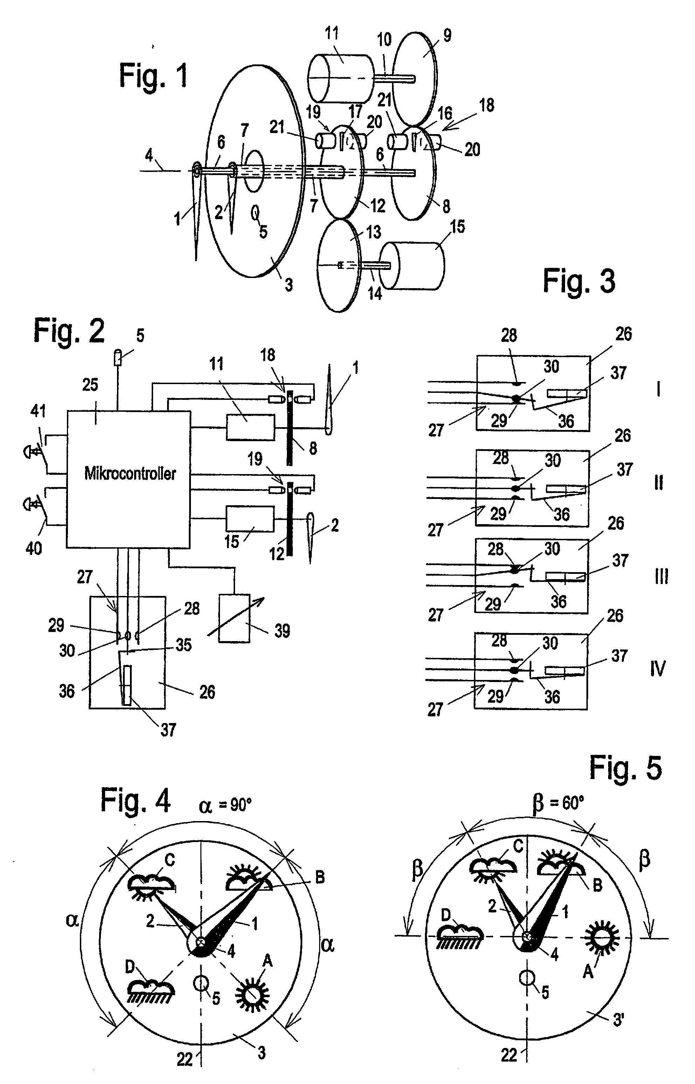

Wie aus den Fig. 4 und 5 zu erkennen ist, ist die erfindungsgemäße Tendenzanzeigevorrichtung des erfindungsgemäßen Barometers mit einem Tendenzzeiger 1 und einem kleineren Nachlaufzeiger 2 versehen. Diese beiden Zeiger 1 und 2 sind koaxial zueinander auf der Frontseite einer Anzeigescheibe 3 bzw. 3' angeordnet.

Beide Anzeigescheiben 3 und 3' sind jeweils mit vier Wettersymbolen A, B, C und D versehen, welche bei der Anzeigescheibe 3 jeweils gleich große Winkelabstände α von 90° aufweisen, deren Winkelabstände β bei der Anzeigescheibe 3' jedoch jeweils nur 60° betragen.

Das Wettersymbol A hat die Bedeutung von Sonnenschein, also Hochdruckwetterlage, das Wettersymbol B hat die Bedeutung "Veränderlich" mit steigender Tendenz, das Wettersymbol C hat die Bedeutung "Veränderlich" mit fallender Tendenz und das Wettersymbol D symbolisiert Regen, also Tiefdruckwetterlage.

Unterhalb der gemeinsamen Zeigerachse 4 befindet sich bei beiden Anzeigescheiben 3 und 3' jeweils eine Leuchtdiode 5, deren Aufgabe es ist, durch periodisches Aufleuchten anzuzeigen, daß sich das Barometer in ordnungsgemäßem Betriebszustand befindet. Außerdem kann diese Leuchtdiode zugleich als Referenzposition für die beiden Zeiger 1 und 2 der Anzeigevorrichtung benutzt werden, wie nachstehend noch näher erläutert wird.

Während der Tendenzzeiger 1 auf einer Zeigerwelle 6 befestigt ist, sitzt der Nachlaufzeiger 2 auf einer Hohlwelle 7. Die Zeigerwelle 6 ist mit einem hinter der Anzeigescheibe 3 liegenden Zahnrad 8 verbunden, das über ein weiteres Zahnrad 9 mit der Motorwelle 10 eines Schrittschaltmotors 11 in Eingriff steht. Die Hohlwelle 7 ist mit einem ebenfalls hinter der Anzeigescheibe 3 liegenden Zahnrad 12 versehen, das über ein weiteres Zahnrad 13 mit der Motorwelle 14 eines zweiten Schrittschaltmotors 15 in Eingriff steht.

Die beiden Zahnräder 8 und 12, welche die Zeiger 1 und 2 unmittelbar und unabhängig voneinander antreiben, sind jeweils mit Markierungsschlitzen 16 bzw. 17 versehen, die mit Hilfe zweier Lichtschranken 18 bzw. 19 die sich dekkenden Referenzpositionen der beiden Zeiger 1 und 2 signalisieren. Die beiden Lichtschranken 18 und 19 bestehen jeweils aus einem Lichtsender 20 und einem optoelektrischen Lichtempfänger, der jeweils dann ein elektronisches Signal abgibt, wenn das vom Lichtsender 20 ausgestrahlte Licht durch den Markierungsschlitz 16 bzw. 17 auf den Lichtempfänger fällt. Das ist dann der Fall, wenn sich das Zahnrad 8 bzw. 12 mit seinem Tendenzzeiger 1 bzw. mit seinem Nachlaufzeiger 2 in der in Fig. 1 dargestellten Referenzlage befindet, d.h. wenn die beiden Zeiger 1 und 2 gemeinsam senkrecht nach unten gerichtet sind und dabei in der Vertikalebene 22 liegen, welche durch die Zeigerachse 4 und mittig durch die darunter liegende Leuchtdiode 5 verläuft.

Zur Steuerung der analogen Tendenzanzeige bzw. der beiden Schrittmotoren 11 und 15, welche die beiden Zeiger 1 und 2 jeweils separat antreiben, ist eine Steuereinheit in Form eines elektronischen Microcontrollers 25 vorgesehen, an den, wie in Fig. 2 schematisch dargestellt ist, sowohl die Lichtschranken 18 und 19 als auch die beiden Schrittmotoren 11 und 15 sowie die Leuchtdiode 5 angeschlossen sind.

Als luftdruckabhängiger Signalgeber 26 ist ein elektrischer dreipoliger Umkehrschalter 27 vorgesehen, der zwei Festkontakte 28 und 29 sowie einen dazwischen angeordneten Umschaltkontakt 30 aufweist. Dieser Umschaltkontakt 30 wird in bekannter Weise über eine auf dem Friktionsprinzip beruhende Überhubkupplung 35 mit einem Schalthebel 36 von einer mechanischen Barometermeßdose 37 betätigt.

Die Funktionsweise eines solchen Umkehrschalters ist im wesentlichen dadurch charakterisiert, daß bei einer Tendenzänderung des Luftdruckes, d.h. bei einer Bewegungsumkehr des Schalthebels 36, eine sofortige Mitnahme des Umschaltkontaktes 30 erfolgt, wodurch ein Abheben von einem der beiden Festkontakte 28 bzw. 29 und bei weiterer Bewegung in der gleichen Richtung ein Anlegen an den gegenüberliegenden Festkontakt 29 bzw. 28 stattfindet. Statt dieses mechanischen Umkehrschalters könnte auch ein rein elektronischer Umkehrschalter vorgesehen sein, der das gleiche bewirkt.

Dieser Umkehrschalter 27 hat also im wesentlichen drei verschiedene Funktionsstellungen, nämlich:
a) der Umschaltkontakt 30 liegt am Festkontakt 28 an,
b) der Umschaltkontakt 30 befindet sich in seiner neutralen Mittelstellung und liegt an keinem der beiden Festkontakte an,
c) der Umschaltkontakt 30 liegt am Festkontakt 29 an.

Aus diesen drei Funktionsstellungen lassen sich jedoch mit Hilfe elektronischer Differenzierschaltungen vier unterschiedliche Witterungszustände darstellen, die in Fig. 3 mit I, II, III und IV bezeichnet sind und jeweils den Wettersymbolen A, B, C bzw. D der Anzeigescheibe 3 bzw. 3' entsprechen, welche die jeweilige Wetterlage bzw. Änderungstendenz symbolisieren und somit erkennbar machen.

Mit Hilfe der elektronischen Schaltungsmittel kann nämlich nicht nur zwischen Hochdruck- und Tiefdruckwetterlage unterschieden werden, sondern auch zwischen einem Zustand, in dem der Luftdruck steigt und einem Zustand in dem der Luftdruck fällt. Bei Hochdruck liegt der Umschaltkontakt 30 am Festkontakt 29 an; es herrscht der Zustand I.
Fällt der Luftdruck, hebt der Umschaltkontakt 30 vom Festkontakt 29 ab. Es kann sein, daß er nun zunächst eine Weile in der neutralen Mittelposition verharrt; es herrscht der Zustand II.
Fällt der Luftdruck weiter, legt sich der Umschaltkontakt 30 an den Festkontakt 28. Es wird in diesem Zustand III niederer Luftdruck signalisiert.

Wenn aus dieser Position der Luftdruck wieder steigt, wird der Umschaltkontakt 30 vom Festkontakt 28 abgehoben und zumindest vorübergehend in seine neutrale Mittelstellung gebracht. Es herrscht der Zustand IV, der bezogen auf die Lage des Umschaltkontaktes 30 identisch ist mit demjenigen des Zustandes II. Jedoch ist beim Zustand IV die vorausgegangene Bewegungsrichtung des Umschaltkontaktes 30 derjenigen des Zustandes II entgegengesetzt. Während im Zustand II der Luftdruck eine fallende Tendenz hat, hat er im Zustand IV eine steigende Tendenz.

Diese vier Zustände I, II, III und IV entsprechen den vier auf der Anzeigescheibe 3 bzw. 3' durch die Wettersymbole A, B, C und D belegten Zeigerstellungen, in welche der Tendenzzeiger 1 durch eine vom Microcontroller errechnete Anzahl von Schaltschritten, die dem Schrittschaltmotor 11 zugeführt werden, gestellt wird. Der Microcontroller 25 erfaßt in zyklischen Abständen, die im Bereich von Sekunden oder im Bereich von mehreren Stunden beliebig festgelegt werden können, den jeweiligen Zustand I bis IV. Aus dieser Information errechnet der Microcontroller nach dem vorstehend beschriebenen Algorhythmus die nächste Zeigerstellung. Der Tendenzzeiger 1 wird durch den Schrittmotor 11, der die errechnete Anzahl von Schrittimpulsen vom Microcontroller erhält, in der stets gleichen Drehrichtung jeweils in die neue Anzeigeposition gebracht, wobei die Verstellstrecke dem einfachen, dem zweifachen oder gar dem dreifachen Winkelabstand α bzw. β entsprechen kann und wobei die Bewegungsstrecke jeweils den in Bewegungsrichtung zwischen dem Wettersymbol A und dem Wettersymbol D liegende Winkelabstand mit eingerechnet ist. Die Drehrichtung entspricht vorzugsweise der Uhrzeigerdrehrichtung.

Um dem Tendenzzeiger 1 auf seiner Zeigerwelle 6 bei der Montage die für die spätere korrekte Anzeige richtige Winkelposition zu geben, wird dieser Tendenzzeiger 1 dann in der in Fig. 1 dargestellten, in der vertikalen Mittelebene 22 liegenden Position auf seine Zeigerwelle 6 aufgesetzt, wenn das Zahnrad 8 die in Fig. 1 dargestellte Referenzposition einnimmt, in welcher sich der Markierungsschlitz 16 in der Lichtschranke 18 befindet. Diese Position des Zahnrades 8 wird durch ein zumindest kurzzeitig entstehendes Signal der Leuchtdiode 5 angezeigt.

Statt einer Lichtschranke könnte auch ein elektrischer Schalter vorgesehen sein, der durch einen Nocken der Zeigerwelle 6 oder des Zahnrades 8 betätigt wird und ein entsprechendes Referenzsignal an den Microcontroller liefert.

Diese Referenzposition wird zugleich als Null-Lage für die Berechnung der jeweils benötigten Anzahl von Schallschrittimpulsen des Schrittmotors 11 benutzt, so daß zugleich ein selbständiges Anlaufen der Anzeigevorrichtung ermöglicht wird.

Mittels eines manuell zu betätigenden Tastschalters 40, der kurzzeitig zu schließen ist, ist es auch möglich, den Tendenzzeiger 1 aus jeder beliebigen Position in die Referenzposition zu stellen.

Jeweils nach Erreichen einer neuen Anzeigeposition des Tendenzanzeigers 1 wird nach Ablauf der eingangs erwähnten Periode, deren Länge mittels eines an den Microcontroller angeschlossenen elektronischen Zeitgebers 39 einstellbar ist, die nächste Zustandsabfrage am Signalgeber 26 durchgeführt. Wenn sich eine Zustandsänderung ergeben hat, wird der Tendenzzeiger 1 in die entsprechend neue Anzeigeposition verstellt.

Sowohl nach dem Einschalten des Gerätes (einlegen der Batterie), bei dem der Tendenzzeiger 1 sofort zu laufen beginnt, wird in der ersten Umdrehung eine eindeutige Referenzpunkterkennung durchgeführt. Anschließend wird, wie bereits erwähnt, von dieser Referenzposition aus der Zeiger in die dem jeweiligen aktuellen Schaltzustand des Signalgebers 26 entsprechende Anzeigestellung gebracht.

Um aus jeder beliebigen Position des Zeigers eine exakte Berechnung der Antriebsschritte bzw. der Schrittsignale für die nächste korrekte Anzeigeposition durchführen zu können, wird bei jeder Umdrehung oder nach einer festgelegten Anzahl von Umdrehungen des Tendenzzeigers jeweils eine Referenzpunkterkennung durchgeführt, d.h. es wird von Zeit zu Zeit eine neue Nullpunkt-Bestimmung für die Berechnung der jeweils erforderlichen Anzahl von Schaltschritten durchgeführt.

Der auf der Hohlwelle 7 befestigte Nachlaufzeiger 2, der vom Schrittmotor 15 angetrieben wird, hat die Aufgabe, jeweils die Position anzuzeigen, aus welcher der Tendenzzeiger 1 während des letzten Einstellvorganges verstellt worden ist.

Die Berechnung der jeweils erforderlichen Schaltschritte, die nötig sind um den Nachlaufzeiger in die Position zu stellen welche der Tendenzzeiger 1 gerade verlassen hat, wird ebenfalls im Microcontroller berechnet und an den Schrittschaltmotor 15 gegeben. Die Verstellung des Nachlaufzeigers 2 erfolgt demgemäß immer unmittelbar nach dem Verstellen des Tendenzzeigers 1 in eine neue Anzeigeposition. Auch der Nachlaufzeiger 2 wird immer in der gleichen Drehrichtung verstellt, so daß es auch bei ihm vorkommen kann, daß er den zwischen den Zeigerstellungen der Wettersymbole A und D liegenden Winkelabstand durchlaufen muß. Dieser Winkelabstand beträgt bei der Anzeigescheibe 3 90° und bei der Anzeigescheibe 3' 180°.
In jedem Fall entspricht der jeweilige Nachlaufwinkel des Nachlaufzeigers 2 dem Winkelabstand, den er in der vorausgegangenen Anzeigeposition vom Tendenzzeiger 1 hatte.

Auch für den Nachlaufzeiger 2 wird von Zeit zu Zeit eine Referenzpunkterkennung durchgeführt, um eventuelle Fehlstellungen zu korrigieren.

Auch das Aufsetzen des Nachlaufzeigers 2 auf die Hohlwelle 7 erfolgt in analoger Weise zum Aufsetzen des Tendenzzeigers 1 auf seine Zeigerwelle 6. D.h. auch der Nachlaufzeiger 2 wird dann auf die Hohlwelle 7 in der in Fig. 1 dargestellten Referenzposition aufgesetzt, wenn das Zahnrad 12 und somit auch der Schrittschaltmotor 15 die Referenzpunktlage einnehmen, aus welcher die jeweiligen Schrittschaltimpuls-Berechnungen für die jeweils anzufahrenden Zeigerpositionen durchgeführt werden.

Auch für den Nachlaufzeiger 2 ist ein Tastschalter 41 vorgesehen, durch dessen kurzzeitige Betätigung der Nachlaufzeiger 2 in seine in Fig. 1 dargestellte Referenzposition gefahren werden kann.

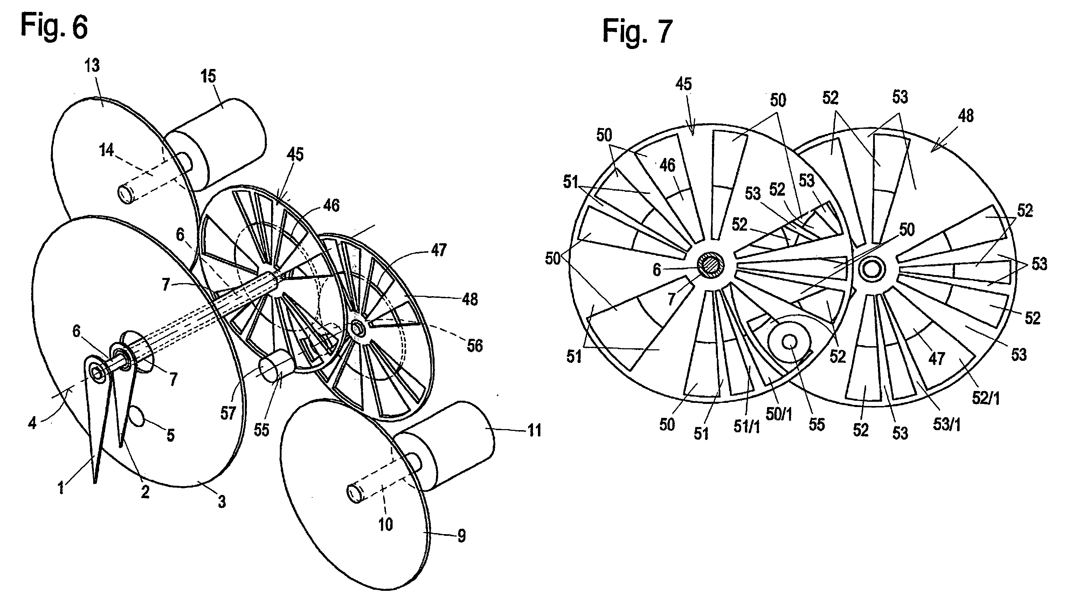

Fig. 6 zeigt ein weiteres Ausführungsbeispiel einer erfindungsgemäßen Tendenzanzeigevorrichtung des erfindungsgemäßen Barometers, deren Aufbau im wesentlichen der Tendenzanzeigevorrichtung aus Fig. 1 entspricht, so daß nachfolgend auch für gleiche Bauteile dieselben Bezugszahlen verwendet sind. So ist ebenfalls ein Tendenzzeiger 1 und ein kleinerer Nachiaufzeiger 2 vorgesehen, welche koaxial zueinander auf der Frontseite der Anzeigescheibe 3 angeordnet sind. Unterhalb der gemeinsamen Zeigerachse 4 ist ebenfalls die Leuchtdiode 5 vorgesehen, über welche der ordnungsgemäße Betriebszustand des Barometers angezeigt wird. Die prinzipielle Funktionsweise dieser Tendenzanzeigevorrichtung entspricht der Funktionsweise der Tendenzanzeigevorrichtung aus den Fig. 1 bis 5, so daß diesbezüglich auf die vorangegangene Beschreibung verwiesen wird.

Unterschiedlich zum Ausführungsbeispiel gemäß der Fig. 1 ist beim Ausführungsbeispiel der Fig. 6 die Ermittlung der Referenzposition des Tendenzzeigers 1 und des Nachlaufzeigers 2. Der Tendenzzeiger 1 ist auf der Zeigerwelle 6 befestigt, während der Nachlaufzeiger 2 auf der Hohlwelle 7 angeordnet ist. Die Hohlwelle 7 ist mit einem hinter der Anzeigescheibe 3 liegenden Zahnrad 45 verbunden, das über ein weiteres Zahnrad 13 mit der Motorwelle 14 des Schrittschaltmotors 15 in Eingriff steht. Die Zeigerwelle 6 ist mit einem ebenfalls hinter der Anzeigescheibe 3 liegenden, im Durchmesse kleineren Zahnrad 46 verbunden, welches bei dem vorliegenden Ausführungsbeispiel hinter dem Zahnrad 45 der Hohlwelle 7 angeordnet ist. Dieses Zahnrad 46 der Hohlwelle 7 steht mit einem im Durchmesser gleichen weiteren Zahnrad 47 in Eingriff, welches drehfest mit einem Zahnrad 48 verbunden ist, dessen Durchmesser dem Zahnrad 45 der Hohlwelle 7 entspricht. Dieses Zahnrad 48 steht über das Zahnrad 9 mit der Motorwelle 10 des Schrittschaltmotors 11 in Eingriff. Somit wird durch den Schrittschaltmotor 11, dessen Motorwelle 10 und dessen Zahnrad 9 das Zahnrad 48 drehend angetrieben, von welchem aus über das mit diesem Zahnrad 48 gekoppelte kleinere Zahnrad 47 das eigentliche Antriebszahnrad 46 der Zeigerwelle 6 angetrieben wird.

Wie aus Fig. 6 und aus Fig. 7 ersichtlich ist, weisen die beiden Zahnräder 45 und 48 eine Strickcodierung auf, welche jeweils aus Durchbrüchen 50, 50/1 bzw. 52, 52/1 sowie dazwischen angeordneten Speichen 51, 51/1 und 53, 53/1 gebildet wird. Sowohl die Durchbrüche 50, 50/1 sowie 52, 52/1 als auch die Speichen 51, 51/1 sowie 53 und 53/1 weisen in Umfangsrichtung jeweils unterschiedliche Breiten. Desweiteren ist insbesondere aus Fig. 7 erkennbar, daß die beiden Zahnräder 45 und 48 hintereinander und nebeneinander angeordnet sind und sich annähernd hälftig überdecken.

Um nun die Referenzposition für den Tendenzzeiger 1 und den Nachlaufzeiger 2 ermitteln zu können, ist bei dem Ausführungsbeispiel gemäß der Fig. 6 und 7 lediglich eine Lichtschranke 55 mit einem Lichtsender 56 sowie einem Lichtempfänger 57 vorgesehen. Diese Lichtschranke 55 ist beiden Zahnrädern 45 und 48 zugeordnet, wie dies insbesondere aus Fig. 7 ersichtlich ist. Dies bedeutet, daß die Lichtschranke 55 zur Erkennung beider Codierungen der Zahnräder 45 und 48 herangezogen wird.

Um eine solche.Auswertung sicherzustellen, werden zunächst beide Zahnräder 45 und 48 und damit die zugehörigen Schrittmotoren 15 und 11 nacheinander schrittweise angetrieben, bis einer der Durchbrüche 50, 50/1 und 52, 52/1 auf die Lichtschranke 55 ausgerichtet ist. Wenn sowohl einer der Durchbrüche 50, 50/1 des Zahnrades 45 als auch der Durchbrüche 52, 52/1 auf die Lichtschranke ausgerichtet ist, kann zunächst für einen der Zeiger 1 oder 2 dessen Referenzposition ermittelt werden.

Zur Ermittlung dieser Referenzposition wird nun zunächst beispielsweise das Zahnrad 48 für den Tendenzzeiger 1 um eine Anzahl von Schritten bewegt, bis sich eine definierte Sequenz von Hell/Dunkelschritten, die sich durch die unterschiedlichen Breiten der Speichen 53, 53/1 des Zahnrades 48 ergibt. Da einer bestimmten Breite einer Speiche, z.B. der Speiche 53/1, auch einer bestimmten Anzahl von Schritten des jeweils zugehörigen Schrittmotors entspricht, kann durch den Mikrocontroller 25 auch die Winkelposition des Zahnrades 48 eindeutig ermittelt werden. Damit ist die Referenzposition, welche beispielsweise bei einer Überdeckung des Durchbruches 52/1 mit der Lichtschranke vorliegt, für den Tendenzzeiger 1 in einfacher Weise auffindbar.

Dasselbe wird nun für den Nachlaufzeiger 2 wiederholt, bis auch dessen Referenzposition gefunden ist. Das heißt, daß auch das Zahnrad 45 um eine bestimmte Anzahl von Schritten bewegt wird, bis sich eine definierte Sequenz von Hell/Dunkelschritten am Ausgang der Lichtschranke 55 einstellt. Damit ist auch die Referenzposition des Zahnrades 45 und somit des Nachlaufzeigers 2 gefunden.

Die weitere Funktionsweise des Ausführungsbeispieles gemäß der Fig. 6 und 7 entspricht, wie bereits oben erwähnt, der Funktionsweise der Tendenzanzeigevorrichtung, wie diese zu den Fig. 1 bis 5 beschrieben wurde.

Der Microcontroller kann mit einer Zusatzschaltung ausgestattet sein, die es ermöglicht, die exakten Luftdruckwerte eines Drucksensors anzuzeigen. Dabei kann dieser Drucksensor mit einer integrierten Elektronik versehen sein, durch welche die Luftdruckwerte selbständig berechnet und als fertiges Datenwort über eine digitale Schnittstelle an den Microcontroller übergeben werden. Alternativ dazu besteht aber auch die Möglichkeit, die Ausgangsspannung eines Drucksensors in dem Microcontroller zu digitalisieren und dann entsprechend für eine digitale Anzeige aufzubereiten.

## Patentansprüche

1. Barometer mit einer elektronisch gesteuerten Tendenzanzeigevorrichtung und einer Barometerdose (37), die luftdruckabhängig über eine Überhubkupplung den Umschaltkontakt (30) eines wenigstens zwei Festkontakte (28, 29) aufweisenden Umkehrschalters (27) betätigt, dessen Schaltzustände (I, II, II, IV) in bestimmten Zeitabständen von einer elektronischen Steuereinheit (25) für die Anzeige abgefragt werden,
**dadurch gekennzeichnet,**
**daß** die Tendenzanzeigevorrichtung einen Tendenzzeiger
(1) aufweist, der von einem ersten Schrittmotor (11) in einer vorbestimmten Richtung um jeweils eine vorbestimmte Anzahl von Schaltschritten dem jeweiligen Schaltzustand (I, II, III, IV) des Umkehrschalters (27) entsprechend drehend verstellt wird, sowie einen Nachlaufzeiger (2), der in koaxialer Anordnung zum Tendenzzeiger (1) von einem zweiten Schrittmotor (15) in der gleichen Drehrichtung nach jeder Verstellbewegung des Tendenzzeigers (1) um die Anzahl von Schaltschritten bewegt, die dem Winkelabstand entspricht, um den die beiden Zeiger (1, 2) während der jeweils vorherigen Anzeige gegeneinander versetzt waren, wobei zur Steuerung der beiden Schrittmotoren (11, 15) ein Mikrocontroller (25) vorgesehen ist, der die jeweiligen Zeigerstellungen registriert und die zur korrekten Anzeige erforderlichen Schaltschritte für die Schrittmotoren (11, 15) der Zeiger (1, 2) berechnet.

2. Barometer nach Anspruch 1, **dadurch gekennzeichnet, daß** der Tendenzzeiger (1) und der Nachlaufzeiger (2) zur Bestimmung einer bestimmten Referenzposition jeweils mit einem Referenzschalter versehen sind, die bei Erreichen der jeweiligen Referenzposition ein Referenzsignal für den Mikrocontroller (25) erzeugen.

3. Barometer nach Anspruch 2, **dadurch gekennzeichnet, daß** der Referenzschalter ein synchron mit der Zeigerwelle (6, 7) des Tendenzzeigers (1) bzw. des Nachlaufzeigers (2) bewegtes Schaltorgan, insbesondere einen Schaltnocken eines mechanischen Kontaktschalters oder eine mit einem Markierungsschlitz (16, 17) versehene Scheibe, insbesondere ein Zahnrad (8, 12), die bzw. das eine Lichtschranke (18, 19) durchläuft, aufweist.

4. Barometer nach Anspruch 1 oder 2, **dadurch gekennzeichnet, daß** zur Bestimmung der Referenzposition des Tendenzzeigers (1) und des Nachlaufzeigers (2) deren Wellen (6, 7) jeweils mit einem kodierten Zahnrad (45, 48) gekoppelt sind, welche axial hintereinander angeordnet sind und sich teilweise überdecken, und
daß eine Lichtschranke (55) vorgesehen ist, die im Umfangsbereich beider Zahnräder (45, 48) zur Erfassung und Auswertung der Codierung beider Zahnräder (45, 48) angeordnet ist.

5. Barometer nach einem der Ansprüche 2 bis 4, **dadurch gekennzeichnet, daß** in der Referenzposition eine Leuchtdiode (5) angeordnet ist, welche durch das Referenzsignal vorübergehend eingeschaltet wird.

6. Barometer nach einem der Ansprüche 1 bis 5, **dadurch gekennzeichnet, daß** der Mikrocontroller (25) mit einem einstellbaren Zeitgeber (39) versehen ist, mit welchem die Abfrageintervalle einstellbar sind.

7. Barometer nach einem der Ansprüche 1 bis 6, **dadurch gekennzeichnet, daß** der Mikrocontroller mit wenigstens einem Tastschalter (40, 41) ausgestattet ist, mit dem wenigstens einer der beiden Zeiger (1, 2) bzw. dessen Schrittmotor (11, 15) in die Referenzposition gefahren werden kann.

## Claims

1. Barometer with an electronically controlled tendency display device and a barometer case (37) actuating the changeover contact (30) of a changeover switch (27) having at least two fixed contacts (28, 29) via an overtravel coupling as a function of the air pressure, the switching states (I, II, II, IV) of the changeover switch (27) being scanned for display by an electronic control unit (25) at specific time intervals, **characterised in that** the tendency display device comprises a tendency hand (1) which is rotatably adjusted by a first stepper motor (11) according to the respective switching state (I, II, III, IV) of the changeover switch in a predetermined direction by a respectively predetermined number of switching steps, and a follow-up hand (2) which is moved in a coaxial arrangement to the tendency hand (1) by a second stepper motor (15) in the same direction of rotation after each adjusting movement of the tendency hand (1) by the number of switching steps corresponding to the angle spacing by which the two hands (1, 2) are offset from one another during the respective preceding display, a microcontroller (25) which records the respective hand positions and calculates the switching steps required for correct display for the stepper motors (11, 15) of the hands (1, 2) being provided to control the two stepper motors (11, 15).

2. Barometer according to claim 1, **characterised in that** the tendency hand (1) and the follow-up hand (2) are each provided with a reference switch for determining a specific reference position, the reference switches producing a reference signal for the microcontroller (25) when the respective reference position is reached.

3. Barometer according to claim 2, **characterised in that** the reference switch comprises a switching member moved synchronously with the hand shaft (6, 7) of the tendency hand (1) or the follow-up hand (2), in particular it comprises a switching cam of a mechanical contact switch or a disc provided with a marking slot (16, 17), in particular a gear wheel (8, 12), the disc or gear wheel traversing a light barrier (18, 19).

4. Barometer according to claim 1 or 2, **characterised in that** to determine the reference position of the tendency hand (1) and the follow-up hand (2), the shafts thereof (6, 7) are each coupled to a coded gear wheel (45, 48), being arranged axially one behind the other and partially overlapping, and **in that** a light barrier (55) is provided which is arranged in the peripheral region of the two gear wheels (45, 48) to detect and evaluate the coding of the two gear wheels (45, 48).

5. Barometer according to any one of claims 2 to 4, **characterised in that** arranged in the reference position is a light-emitting diode (5) which is temporarily switched on by the reference signal.

6. Barometer according to any one claims 1 to 5, **characterised in that** the microcontroller (25) is provided with an adjustable timer (39) with which the scanning intervals can be adjusted.

7. Barometer according to any one claims 1 to 6, **characterised in that** the microcontroller is equipped with at least one momentary-contact switch (40, 41), with which at least one of the two hands (1, 2) or the stepper motor (11, 15) thereof can be moved into the reference position.

## Revendications

1. Baromètre comportant un dispositif d'affichage de tendance à commande électronique et une capsule barométrique (37) qui actionne en fonction de la pression atmosphérique, par un accouplement à surcourse, le contact inverseur (30) d'un commutateur inverseur (27) présentant au moins deux contacts fixes (28, 29), dont les états de commutation (I, II, III, IV) sont interrogés à intervalles définis par une unité de commande (25) aux fins d'affichage,
**caractérisé par le fait**
**que** le dispositif d'affichage de tendance présente une aiguille de tendance (1) qui est déplacée en rotation par un premier moteur pas à pas (11) dans un sens prédéfini, d'un nombre de pas de commutation prédéfini en fonction de l'état de commutation (I, II, III, IV) du commutateur inverseur (27), ainsi qu'une aiguille de poursuite (2), coaxiale à l'aiguille de tendance (1), qui est déplacée dans le même sens de rotation par un deuxième moteur pas à pas (15), après chaque déplacement de l'aiguille de tendance (1), du nombre de pas de commutation correspondant à l'écart angulaire dont les deux aiguilles (1, 2) étaient décalées pendant l'affichage précédent, les deux moteurs pas à pas (11, 15) étant commandés par un microcontrôleur (25) qui enregistre les positions respectives des aiguilles et calcule les pas de commutation nécessaires aux moteurs pas à pas (11, 15) des aiguilles (1, 2) pour un affichage correct.

2. Baromètre selon la revendication 1, **caractérisé par le fait que** l'aiguille de tendance (1) et l'aiguille de poursuite (2) sont munies chacune, pour la détermination d'une position de référence définie, d'un commutateur de référence qui génère un signal de référence pour le microcontrôleur (25) chaque fois que l'aiguille concernée atteint sa position de référence.

3. Baromètre selon la revendication 2, **caractérisé par le fait que** le commutateur de référence présente un organe de commutation se déplaçant de façon synchrone avec l'axe (6 ou 7) de l'aiguille de tendance (1) ou de l'aiguille de poursuite (2), en particulier une came de commutation d'un contacteur mécanique ou un disque muni d'une fente repère (16, 17), en particulier une roue dentée (8, 12), qui tourne devant une barrière photoélectrique (18, 19).

4. Baromètre selon la revendication 1 ou 2, **caractérisé par le fait que** pour la détermination de la position de référence de l'aiguille de tendance (1) et de l'aiguille de poursuite (2), leurs axes (6, 7) sont couplés chacun à une roue dentée codée (45, 48), lesquelles sont disposées l'une derrière l'autre axialement et se recouvrent partiellement,
et
qu'il est prévu une barrière lumineuse (55) qui est disposée dans la zone circonférentielle des deux roues dentées (45, 48) pour la détection et l'évaluation du codage des deux roues dentées (45, 48).

5. Baromètre selon l'une des revendications 2 à 4, **caractérisé par le fait que** l'on dispose à la position de référence une diode électroluminescente (5) qui est temporairement activée par le signal de référence.

6. Baromètre selon l'une des revendications 1 à 5, **caractérisé par le fait que** le microcontrôleur (25) est muni d'une horloge (39) réglable qui permet de régler les intervalles d'interrogation.

7. Baromètre selon l'une des revendications 1 à 6, **caractérisé par le fait que** le microcontrôleur est équipé d'au moins un bouton-poussoir (40, 41) qui permet d'amener au moins une des deux aiguilles (1, 2) ou son moteur pas à pas (11, 15) à la position de référence.
